# EUROPEAN PATENT APPLICATION

(11) **EP 1 916 779 A1**
(43) Date of publication of application: **30.04.2008**
(21) Application number: 06301075.5
(22) Date of filing: 23.10.2006
(51) Int. Cl.: H04B 7/06, H04Q 7/36

(54) **Method for performing user scheduling on a shared channel of a radio communication system, as well as corresponding base station**

(71) Applicant: Alcatel Lucent, 75008 Paris (FR)
(72) Inventor: Wild, Thorsten, 70499 Stuttgart (DE); Hoek, Cornelis, 71732 Tamm (DE)
(74) Representative: Wetzel, Emmanuelle

(57) **Abstract**

The present invention relates to a method for scheduling users in basic resource units of a shared channel (CH3) in a radio communication network comprising a base station (10) having at least two transmit antennas (11,12).
According to the present invention, the method comprises the steps of:
- Sending from said base station over said two antennas orthogonal pilot sequences (S₁(t), S₂(t));
- Estimating the channel for at least two mobile stations and selecting optimal transmission weights to be applied to said antennas for transmission from said base station to said mobile station (13);
- Reporting said optimal transmission weights to said base station;
- Detecting at said base station at least two mobile stations having reported orthogonal optimal transmission weights,
- Scheduling said at least two mobile stations simultaneously on said shared channel.

## Description

### BACKGROUND OF THE INVENTION

The present invention relates to a method for scheduling users on a shared channel in a radio communication system using closed loop transmit diversity and space division multiple access (SDMA).

SDMA is a multiple access technique based on the spatial separation of users, enabling it to reuse the same frequency, the same code and the same time slot for two or more users without causing interference between them under the condition that they are seen in different directions from the base station and under the condition that the base station has multiple transmit antennas (or antenna array) for performing beamforming.

The appropriate selection of the users is a crucial point for throughput optimisation.

Document "Adaptive Resource Allocation in SDMA-based Wireless Broadband Networks with OFDM Signaling" I. Koutsopoulos and L. Tassiulas, in Proc. of IEEE INFOCOM, June 2002 described a solution for performing user allocation in a SDMA based system with high computational load.

In prior art beamforming and scheduling are two separate procedures which are handled in separate communication layers or function blocks independently of each other.

On the other hand, in UMTS closed loop diversity is applied for optimising the received signal. For this purpose, a base station equipped with multiple antennas transmits data to mobile users using for each user the best appropriate transmission weights for each antennas. The transmission weights are selected out of a codebook after channel estimations performed at the mobile station and reported to the base station.

This method nevertheless presents the disadvantage that users may use the same transmission weights due to their measurements and be scheduled in a way that causes interference.

A particular object of the present invention is improve the user resources allocation in SDMA capable radio communication networks.

Another object of the invention is to provide a corresponding base station.

### SUMMARY OF THE INVENTION

These objects, and others that appear below, are achieved by a method for scheduling users in basic resource units of a shared channel in a radio communication network according to claim 1, and a base station according to claim 7.

The aim of the present invention is to use space-division multiple access (SDMA) ability of radio communication networks equipped with bases station having at least two transmit antennas and performing transmit diversity in order to improve the user's scheduling on shared channels. For this purpose, it is expected to re-use the same time/frequency resources for different mobile thanks to spatial separation which can be exploited by a proper design of the antenna weights in the downlink. For this purpose, the invention schedules on the same time slot users which show orthogonal transmission weights.

In a preferred embodiment of the present invention, the users showing orthogonal transmission weights are not only scheduled on the same time slot of the shared channel but are also allocated the same code of CDMA transmission scheme.

The method according to the present invention presents the advantage to increase the cell throughput and reduce the interference in SDMA capable radio communication systems.

This method further presents the advantage to be applicable to UMTS systems without any standard modifications.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows block diagram illustrating the system in which the method according to the present application can be implemented;
- Figure 2 details the different steps of the method according to the present invention.

### DETAILED DESCRIPTION OF THE INVENTION

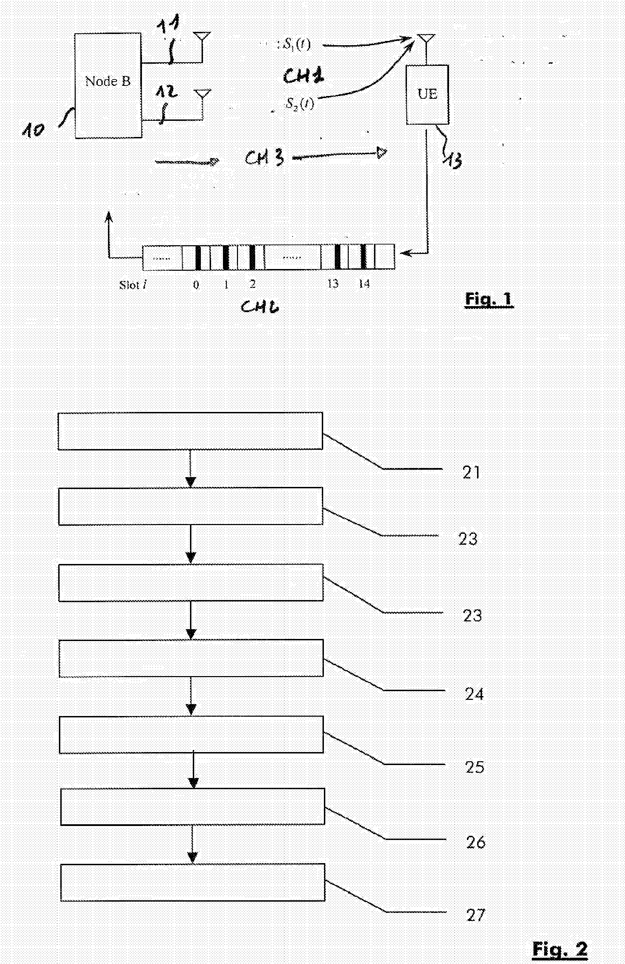

Figure 1 shows block diagram illustrating the system in which the method according to the present application can be implemented. The system comprises a base station 10 comprising two antennas 11, 12 and a terminal 13. First, second and third communication channels CH1, CH2, CH3 are available between base station 10 and terminal 13. Channels CH1, CH2, CH3 are preferably physical channels i.e. entities for data transmission.

First channel CH1 is used for the purpose of estimating the propagation channel between base station 10 and terminal 20. This enables it detect how the data transmitted on physical channels are influenced by physics of wave propagation on the radio link. Preferably, in an UMTS system first channel CH1 is a Common Pilot CHannel (CPICH) which can be used for measurements of the signal quality.

Second channel CH2 is used for the purpose of sending commands from the terminal to the base station regarding the optimal weights which should be applied for diversity transmission. Preferably, in an UMTS system is second channel CH2 a Dedicated Physical Control Channel (DPCCH) on which the signaling is transmitted on the uplink by terminal 13 to base station 10.

Third channel CH3 is a shared channel on which different terminals 13 should be scheduled. Preferably in an UMTS system, channel CH3 is a High Speed Shared Control Channel (HS-SCCH) or a high speed physical downlink shared channel (HS-PDSCH) which are important for communicating in High Speed Downlink Packet Access (HSDPA) mode.

It will be understood by a person skilled in the art that some of the three channels CH, 1, CH2, CH3 may be embodied on the same physical channel.

According to the present invention, base station 10 sends using first channel CH1 orthogonal known pilot sequences, S1, S2 over several transmit antennas. Each transmit antenna transmits its own sequence and between the antennas the sequences are orthogonal. In a simplified embodiment of the invention two transmit antennas may be used. Alternatively, any number of transmit antenna transmitting orthogonal sequences may be envisaged.

Pilot sequences are received at terminal 13 which performs channel estimations based on the known pilot sequences S1, S2. Channel estimation may be performed using a RAKE receiver, channel estimation being done separately for each RAKE finger. This consists in averaging known pilot symbols with compensated phases. Additionally, to improve accuracy, the channel estimates of several slots can be averaged with a weighting window. (WMSA = Weighted Multi Slot Averaging).

Further, terminal 13 selects from a codebook with available weights combinations the optimal transmit weights which maximize the received power of the superposition from the two transmit antennas. The selection of the optimal may be realized in that for 2 transmit antennas, 4 different sets of weights are available. Terminal 13 can calculate the receive power depending on the estimated channel and all possible weights. These weights which maximize the receive power are selected as "optimal".

Then, the selected codebook entry is associated a codebook index which is transmitted from terminal 13 back to base station 10 on second channel 2.

According to the present invention, this process is made the same way by all terminals which are under the coverage of base station 10 and which report on the uplink channel CH2 their optimal transmit weights. Consequently, base station 10 has the knowledge of all optimal transmit weights for the different terminals under its coverage.

Further according to the present invention, base station 10 detects among all reported optimal transmit weights if some are orthogonal to each other. If it is the case base station 10 schedules the terminals corresponding to the orthogonal optimal transmission weights simultaneously on the shared channel CH3. Orthogonality of the transmit weights may be detected using a simple scalar product operation. In case 4 possible weights are available as foreseen for closed loop mode 1 in UMTS standard, each one of these 4 weights has exactly one out of the other 3 weights as orthogonal partner.

Preferably, the optimal transmitted weights corresponding codebook index reported on uplink channel CH are coded on 2 bits resulting in a codebook size of 4.. For a particular weights combination there is always a second orthogonal weights combination which can be used to schedule two terminals simultaneously.

In a first embodiment of the present invention, the simultaneously scheduled terminals may use different spreading codes. Even if spreading codes are deemed to be orthogonal, mutual interference are anyway occurring due to multi path propagation. This presents the advantage to reduce the cross talks between the codes.

In a second embodiment of the present invention, the simultaneously scheduled terminals use the same spreading code. This presents the advantage to virtually increase the number of available spreading codes since orthogonally at another level enable the used of the same spreading code by several terminals without generating interference.

For having a efficient implementation of this method using space division multiple access SDMA, it is important to have low angle spread at base station antennas to enable a better separation of the users.

Figure 2 details the different steps of the method according to the present invention.

Step 21: consists in sending orthogonal pilot sequences over at least two transmit antennas at the base station, each antenna sending its own pilot sequence, two sequences being orthogonal to each other.

Step 22 consists in estimating at terminals the channel according to the signal level of the received orthogonal pilot sequences. Usually channel estimation is done separately per RAKE finger. It consists in the averaging of (known) pilot symbols with compensated phases. Additionally, to improve accuracy, the channel estimates of several slots can be averaged with a weighting window. (WMSA = Weighted Multi Slot Averaging). It will be clear for a person skilled in the art that other type of usual channel estimation methods may be employed.

Step 23 consists in selecting at the terminals the optimal weights of the signal sent by the at least two antennas of the base station out of a codebook. Such a step of selecting the optimal weight is a usual procedure already done in closed loop transmit diversity schemes. For example, such a method could consist in selecting the optimal weights using a brute force search since there are only 4 different sets of weights available in the standard. The mobile can calculate the received power depending on the estimated channel and all possible weights. These weights which maximize the receive power are selected as "optimal".

Step 24 consists in sending a codebook index corresponding the selected optimal weights. In a preferred embodiment of the present invention, the codebook index is coded on 2 bits.

Step 25 consists in receiving at the base station codeword index from a plurality of terminals located under the coverage of the base station.

Step 26 consists in detecting at said base stations terminals having reported orthogonal transmission weights. Orthogonality of the transmit weights is determined using a simple scalar product. In case there are only 4 possible weights as in the existing standard for closed loop mode 1 in UMTS, Each one of these weights has exactly one out of the other 3 weights as orthogonal partner.

Step 27 consists in scheduling said terminals having reported orthogonal transmission weights simultaneously on a shared channel i.e. on the same time-frequency-code resource.

The method may be used in a 2 transmit antenna environment in which case only 2 users having orthogonal weights may be scheduled simultaneously. It will be understood by those skilled in the art that the invention can be applied to any number of transmit antennas (4 or more) in which case more than 2 users may be scheduled simultaneously.

## Claims

1. Method for scheduling users in basic resource units of a shared channel in a radio communication network comprising a base station having at least two transmit antennas and performing transmit diversity, said method comprising the steps of:
- Sending from said base station over said two antennas orthogonal pilot sequences;
- Estimating the channel for at least two mobile stations and selecting optimal transmission weights to be applied to said antennas for transmission from said base station to said mobile station;
- Reporting said optimal transmission weights to said base station;
- Detecting at said base station at least two mobile stations having reported orthogonal optimal transmission weights,
- Scheduling said at least two mobile stations simultaneously on said shared channel.

2. Method according to claim 1, further comprising the step of scheduling said at least two mobile stations on the same basic resource unit on said shared channel.

3. Method according to claim 1 in that said transmission weights are reported in two feedback bits sent in two time slots, said orthogonality of said transmission weights being calculated bases on said two feedback bits.

4. Method according to claim 1, further comprising the step of making statistics on previous and current reported transmission weight to detect mobile stations using orthogonal optimal transmission weights.

5. Method according to claim 1, wherein said optimal transmission weights selected from a codebook, said index of the selected transmission weight in said codebook being reported as feedback information to said base station on an uplink control channel.

6. Method according to claim 1, wherein said optimal transmission weights are maximising the received power of the superposition of the signal sent by said two transmit antennas.

7. Base station (12) able to be used in a SDMA capable radio communication system, said base station comprising at least two transmit antennas, comprising means for performing transmit diversity, and further comprising:
- means for sending over said two antennas orthogonal pilot sequences;
- means for receiving optimal transmission weights from at least two mobile stations, said optimal transmission weight being calculated as a function of said orthogonal pilot sequences and of said channel between said base stations and said mobile stations;
- means for detecting at least two mobile stations having reported orthogonal optimal transmission weights;
- means for scheduling said at least two mobile stations at the same time on said shared channel.
